Europäisches Patentamt

(19) European Patent Office

Office européen des brevets

(11) Numéro de publication: **0 233 422**
**B1**

(12) **FASCICULE DE BREVET EUROPEEN**

(51) Int. Cl.⁵: **G06F 15/72**

(45) Date de publication du fascicule du brevet:
30.05.90

(21) Numéro de dépôt: **86402752.9**

(22) Date de dépôt: **10.12.86**

(54) Procédé de surfaçage de zones d'images délimitées par des contours pour processeur graphique, et processeur de surfaçage pour la mise en oeuvre de ce procédé.

(30) Priorité: **13.12.85 FR 8518525**

(43) Date de publication de la demande:
**26.08.87 Bulletin 87/35**

(45) Mention de la délivrance du brevet:
**30.05.90 Bulletin 90/22**

(84) Etats contractants désignés:
**BE CH DE GB IT LI NL**

(56) Documents cités:
**EP-A- 0 145 821**

**SYSTEMS-COMPUTERS-CONTROLS,
vol. 11, no. 5, septembre-octobre 1980, pages 83-92, Scripta Publishing Co., Silver Spring, Maryland, US;
T. HOSHINO et al.: "A computer coloring technique for simple figures using run-length coding"
COMPUTER GRAPHICS AND IMAGE PROCESSING,
vol. 10, no. 2, juin 1979, pages 126-141, Academic Press, Inc., New York, US; T. PAVLIDIS: "Filling algorithms for raster graphics"
IBM TECHNICAL DISCLOSURE BULLETIN,
vol. 14, no. 4, septembre 1971, pages 1229-1230, New York, US; D. BERGER et al.: "Alteration of digitized image"**

(73) Titulaire: **THOMSON-CSF, 51, Esplanade du Général de Gaulle, F-92800 Puteaux(FR)**

(72) Inventeur: **Gallez, François, THOMSON-CSF SCPI 19, avenue de Messine, F-75008 Paris(FR)**
Inventeur: **Pierson, Frédéric, THOMSON-CSF SCPI 19, avenue de Messine, F-75008 Paris(FR)**

(74) Mandataire: **Turlèque, Clotilde et al, THOMSON-CSF SCPI, F-92045 PARIS LA DEFENSE CEDEX 67(FR)**

## Description

La présente invention concerne un procédé de surfaçage de zones d'images délimitées par des contours pour processeur graphique et un processeur de surfaçage pour la mise en oeuvre de ce procédé.

Les procédés de surfaçage sont mis en oeuvre dans les processeurs graphiques pour faire apparaître sur un écran des surfaces délimitées par les lignes de contours. Ces surfaces sont hachurées, colorées ou encore remplies de motifs répétitifs. Leur mise en oeuvre s'effectue à l'aide de processeurs de surfaçage (voir par exemple EP-A 0 145 821). Ceux-ci possèdent une mémoire auxiliaire, encore appelée mémoire de contours, à l'intérieur de laquelle les lignes contours de l'image sont mémorisées en faisant usage des fonctions graphiques du processeur graphique. Un seul bit, ou élément binaire, suffit habituellement pour identifier chaque pixel d'un contour inscrit dans cette mémoire. L'opération de surfaçage consiste à identifier les pixels internes à ces contours. L'identification a lieu en déterminant les points d'intersection de chaque ligne de pixel de l'image avec le contour pour inclure à l'intérieur de la surface les segments horizontaux ainsi délimités.

Les procédés de surfaçage connus présentent l'inconvénient majeur qu'ils ne permettent pas la détection de façon simple des points doubles qui apparaissent sur certains contours. Certains processeurs de surfaçage remédient à cette difficulté en opérant une analyse de la mémoire de contours non pas le long des lignes en démarrant toujours à gauche à l'extérieur d'une surface délimitée par un contour mais en démarrant d'un point interne à celle-ci. Mais cette méthode de balayage est délicate à mettre en oeuvre et des points internes aux surfaces sont omis, lorsqu'en particulier certains contours présentent des concavités. De plus, elle présente l'inconvénient majeur d'exiger que soient fournies, en plus des coordonnées des points situés sur les contours les coordonnées d'autant de points de départ qu'il y a de boucles dans les contours.

Le but de l'invention est de pallier les inconvénients précités.

A cet effet, l'invention a pour objet, un procédé de surfaçage de zones d'images délimitées par des contours pour processeur graphique, caractérisé en ce qu'il consiste à mémoriser dans une mémoire auxiliaire les contours fournis par le processeur graphique en excluant les points doubles, à balayer l'image ligne à ligne pour déterminer les points d'intersection des lignes et des contours, à mémoriser les valeurs minimales et maximales des points d'intersection pour délimiter dans chaque contour la zone à surfacer, à considérer dans chaque zone ainsi délimitée les pixels un à un le long de chaque ligne pour déterminer s'ils sont internes à la zone à surfacer et les charger si tel est le cas à l'intérieur d'une mémoire d'image.

L'invention a également pour objet un processeur de surfaçage faisant application du procédé précité.

L'invention sera mieux comprise et d'autres caractéristiques apparaîtront à l'aide de la description qui suit en référence aux figures annexées qui représentent :

- la figure 1 un organigramme illustrant les phases du procédé de surfaçage selon l'invention,
- la figure 2 la structure d'une table de décision,
- la figure 3 la structure du processeur de surfaçage selon l'invention,
- la figure 4 un schéma de réalisation de la logique de décision de la figure 2.

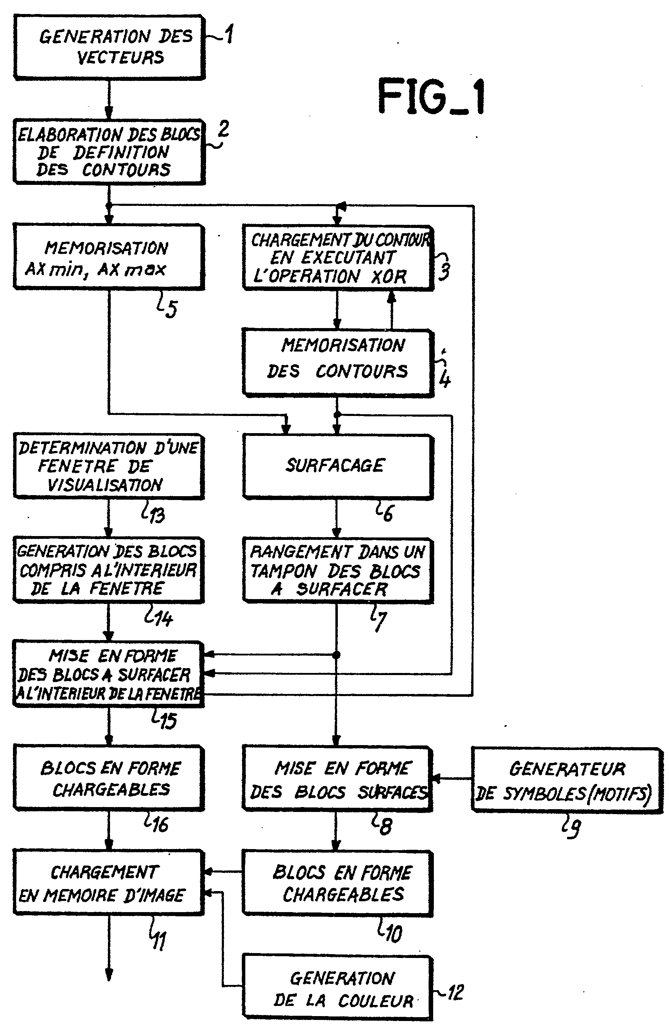

Le procédé selon l'invention est décrit ci-après à l'aide de l'organigramme de la figure 1. Il consiste, aux étapes représentées en 1 et 2, à rassembler les vecteurs représentant le tracé fourni par le processeur graphique en blocs de pixels pour représenter les contours de l'image et, à charger aux étapes 3 et 4 chaque vecteur dans une mémoire de contours. Ce chargement s'effectue à l'étape 3 au travers d'un opérateur qui exécute l'opération connue en logique sous la désignation "OU exclusif" ou encore XOR entre l'état 1 logique de chaque pixel appartenant à un contour à mémoriser et les contenus des emplacements correspondants de la mémoire où les pixels doivent être chargés, pour exclure sur les contours ainsi chargés les points doubles. De cette façon, un état 1 logique matérialisant un pixel sur un contour pourra être inscrit en mémoire de contour chaque fois que l'emplacement correspondant à l'adresse indiquée dans la mémoire sera libre (état 0), et un état 0 sera inscrit en mémoire à la place d'un état 1 logique lorsque l'emplacement indiqué par l'adresse d'un pixel sur un contour sera déjà occupé pour matérialiser un pixel sur le contour précédemment enregistré à cet emplacement. A l'étape 5 les points d'intersection des lignes de l'image avec les contours sont fournis par le processeur graphique et mémorisés afin de délimiter dans chaque contour la zone à surfacer. Le surfaçage proprement dit est exécuté à l'étape 6. Il consiste à considérer dans chaque zone à analyser, limitée comme indiqué ci-dessus, les pixels un à un le long de leur ligne et à déterminer s'ils sont ou non internes à la surface. La décision est prise, par un organe de décision qui sera décrit ci-après, en prenant en considération les états des pixels voisins entourant le pixel analysé en fonction :

1) de l'appartenance ou non au contour de chacun des pixels voisins,
2) de l'appartenance ou non à la surface du pixel qui précède le pixel analysé sur la même ligne,
3) et de l'appartenance ou non à la surface des pixels voisins du pixel analysé sur la ligne précédente.

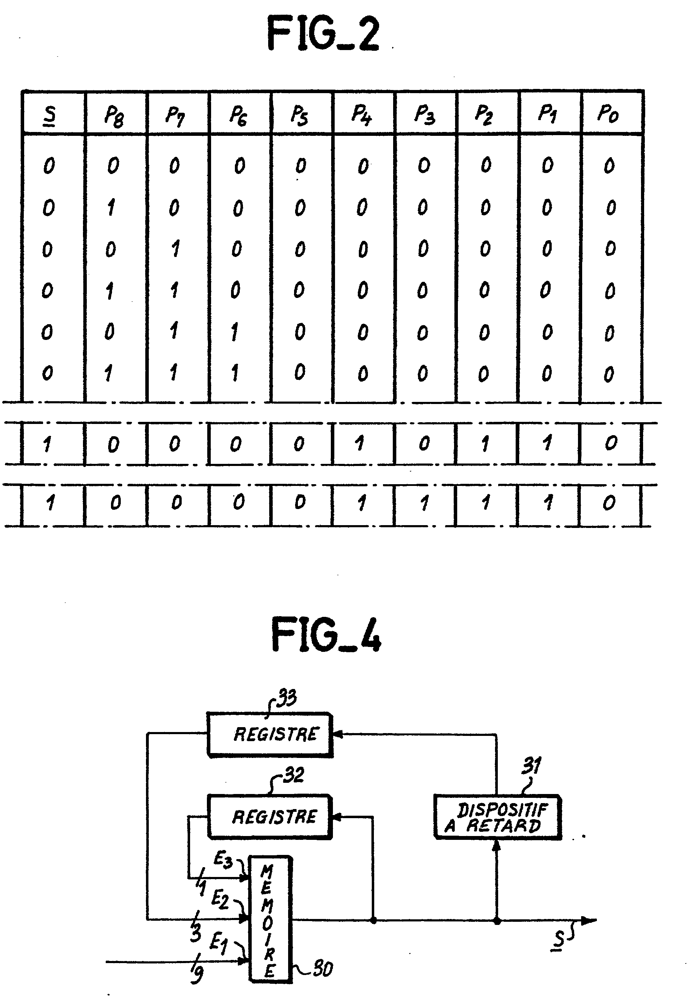

A titre d'exemple, en prenant pour pixels voisins ceux compris dans un carré de 3 × 3 pixels centré autour de chaque pixel analysé, le mode de décision précité pourra être exécuté en tenant compte des valeurs de l'ensemble des neuf pixels voisins enregistrés dans la mémoire de contour et de l'appartenance ou non à la surface d'une part, des trois pixels voisins situés sur la ligne précédente et d'autre part, de celui qui précède le pixel analysé sur la même ligne. Au total, dans ce cas, la décision sera prise en fonction de $2^{13}$ états possibles qui, pour des commodités de réalisation pourront être consignés dans une table de décision du type de celle qui est représentée à la figure 2 dans laquelle sont représentées quelques combinaisons particulières parmi les $2^{13}$ combinaisons possibles d'un carré de 9 pixels référencés de $P_0$ à $P_8$. $P_0$ représente le pixel analysé, $P_1$, $P_2$ et $P_3$ désignant les trois pixels voisins du pixel $P_0$ sur la ligne précédente, $P_4$ désigne le pixel qui précède le pixel $P_0$ sur la même ligne, $P_5$ à $P_8$ désignent les pixels restant du carré et $\underline{S}$ désigne l'appartenance ou non du pixel $P_0$ à la surface.

Le procédé continue aux étapes 7 à 12 pour préparer les blocs des zones à surfacer en vue de leur chargement en mémoire d'image. A l'étape 7 les résultats d'analyse, transmis pixel par pixel en exécution de l'étape 6, sont regroupés en blocs à surfacer de 8 × 8 bits par exemple, chaque bit ayant une valeur 1 ou 0 selon que le pixel correspondant a été déclaré interne ou non à la surface. Chacun des bits d'un bloc à surfacer est éventuellement remplacé à l'étape 8 suivante par plusieurs bits pour définir un aspect de surface matérialisé par exemple par plusieurs symboles qui sont délivrés à l'étape 9 par un générateur de symboles. Le chargement en mémoire d'image des blocs ainsi formés est ensuite exécuté aux étapes 10 et 11 en adjoignant au besoin à l'étape 12 un mot d'aspect pour désigner la couleur de la zone surfacée.

Un intérêt du procédé qui vient d'être décrit est qu'il permet un fonctionnement dans un mode connu dans le langage anglo-saxon sous le vocable "clipping", c'est-à-dire, un mode qui permet le surfaçage de morceaux d'images délimités par des fenêtres de formes quelconques. Chaque fenêtre est transmise par le processeur graphique aux étapes 13 et 14 pour être chargée dans la mémoire de contours. Le surfaçage de la fenêtre est lancé en exécutant comme précédemment les étapes 3 à 7. Cependant les blocs surfacés obtenus ne sont pas combinés comme précédemment à des motifs pour obtenir des blocs chargeables en mémoire d'image, ils sont au contraire chargés dans la mémoire de contours ce qui ne perturbe pas le fonctionnement de l'organe de décision, car ce chargement s'opère dans la zone de mémoire déjà analysée.

L'analyse terminée, la surface de la fenêtre est définie par les bits chargés en mémoire de contours. Un découpage d'image ou encore un "clipping" de l'image à travers cette fenêtre peut alors s'effectuer sur toute image compilée par le processeur graphique. Les blocs définissant l'image, produits par le générateur de vecteur ou le générateur de symboles associé au processeur graphique, peuvent alors être transmis au processeur de surfaçage de l'invention fonctionnant dans le mode "clipping". Pour chaque bloc reçu, le processeur de surfaçage extrait de la mémoire de contour aux étapes 15 et 16 le bloc homologue. Les blocs ainsi obtenus sont chargés en mémoire d'image à l'étape 11 après avoir reçu leur indication de couleur au cours de l'étape 12.

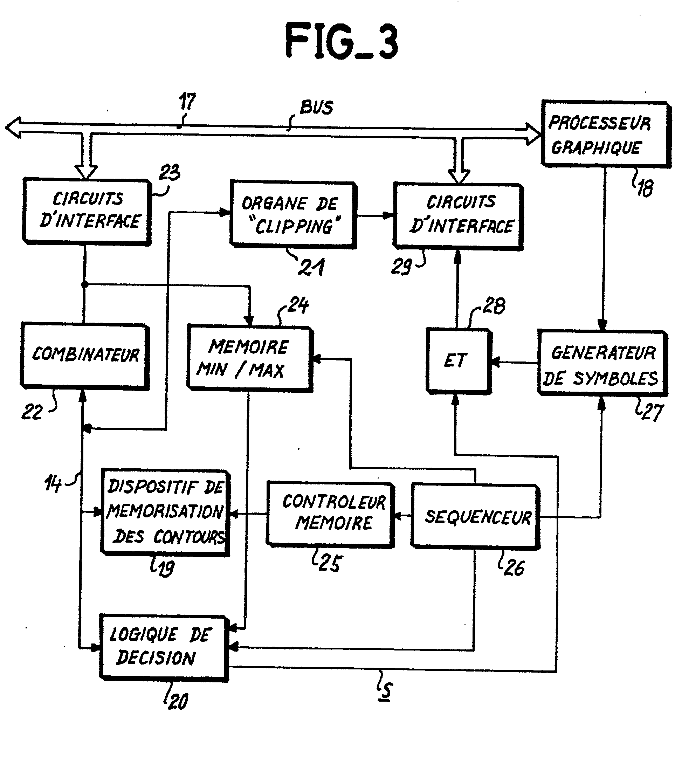

Un processeur de surfaçage, permettant l'exécution du procédé précité, est décrit ci-après à l'aide du schéma de la figure 3. Ce processeur est organisé autour d'un bus de données 17 qui assure le couplage et le transfert des données entre le processeur de surfaçage de l'invention et un processeur graphique 18. Il comprend, un dispositif de mémorisation des contours des zones à surfacer 19, une logique de décision 20 décrite ci-après et un organe de "clipping" 21 constitué par des bancs de registres qui assurent la communication entre le dispositif de mémorisation des contours 19 et le processeur graphique 18 pour permettre le chargement des fenêtres surfacées dans une mémoire d'image, non représentée, du processeur graphique 18. Le dispositif de mémorisation des contours des zones à surfacer 19 est couplé au bus de données 17 à travers un circuit de combinateur "OU exclusif" 22 et des circuits d'interface 23. Ces derniers sont constitués de façon connue, par des registres tampons ou tout dispositif équivalent permettant le stockage momentané des données transitant sur le bus de données 17 pour ensuite appliquer celles-ci à l'entrée du circuit combinateur 22.

Il comprend également :
- une mémoire 24 pour mémoriser les coordonnées maximales et minimales des contours sur chaque ligne d'image,
- un contrôleur de mémoire 25 et un séquenceur 26 pour lancer de façon connue des cycles d'écriture et de lecture des données à l'intérieur du dispositif de mémorisation des contours 19, et de la mémoire 24 et pour commander les opérations logiques exécutées par la logique de décision 20,
- un générateur de symboles 27 couplé au bus de données 17 au moyen d'un circuit combinateur "ET logique" 28 et des circuits d'interface 29. Les circuits d'interface 29 sont constitués de façon connue par des registres tampons, non représentés, et assurent également l'interface entre l'organe de "clipping" 21 et le bus 17. Le circuit combinateur 28 est également couplé à une sortie $\underline{S}$ de la logique de décision 20 pour effectuer le ET logique entre les bits représentant les pixels surfacés fournis par la logique de décision 20 et les symboles fournis par le générateur de symboles 27 et appliquer les résultats obtenus à l'entrée des circuits d'interface 29.

Un mode de réalisation de la logique de décision 20 est représenté à la figure 4. Cette logique comprend une mémoire morte programmable 30 dans laquelle est mémorisée la table de décision de la figure 2. Cette mémoire est adressée par les treize bits d'état des pixels entourant chaque pixel analysé décrit précédemment. Elle reçoit sur une première entrée d'adressage $E_1$ les neuf états des pixels entourant chaque pixel analysé fournis par la mémoire de contours, une deuxième entrée d'adressage $E_2$ sur laquelle sont appliqués les trois états des pixels voisins de la ligne précédant la ligne appartenant au pixel analysé et enfin une troisième entrée d'adressage $E_3$ sur laquelle est appliqué l'état du pixel voisin précédant sur la même ligne le pixel analysé. Les trois états des pixels appliqués sur la deuxième entrée $E_2$ d'adressage sont transmis par trois sorties d'un registre à décalage 33 dont l'entrée est cou-

plée à la sortie $\underline{S}$ de données de la mémoire 30 au moyen d'un dispositif à retard 31 de la durée d'une ligne de balayage. L'état du pixel appliqué sur l'entrée d'adressage $E_3$ provient de la sortie d'un registre 32 dont l'entrée est directement couplée à la sortie de données de la mémoire 30.

## Revendications

1. Procédé de surfaçage de zones d'images délimitées par des contours pour processeur graphique, caractérisé en ce qu'il consiste à mémoriser (4) dans une mémoire auxiliaire (19) les contours fournis par le processeur graphique (18) en excluant les points doubles (3), à balayer l'image ligne à ligne pour déterminer les points d'intersection des lignes et des contours, à mémoriser (5) les valeurs maximales et minimales des points d'intersection pour délimiter dans chaque contour la zone à surfacer, à considérer (6, 7) dans chaque zone ainsi délimitée les pixels un à un le long de chaque ligne pour déterminer s'ils sont internes à la zone à surfacer et les charger si tel est le cas (8, 9, 10, 11, 12) à l'intérieur d'une mémoire d'image.

2. Processeur de surfaçage pour la mise en oeuvre du procédé selon la revendication 1, comprenant:
- un dispositif (19) de mémorisation des contours de l'image,
- et une logique de décision (20) couplée au dispositif de mémorisation des contours pour constater l'appartenance de chaque pixel de l'image analysée à une zone délimitée par un contour à surfacer, et caractérisé en ce qu'il comprend:
- un circuit "OU exclusif" (22) couplé au dispositif de mémorisation des contours (19) pour permettre l'enregistrement, dans le dispositif de mémorisation des contours (19), des pixels appartenant à un contour à surfacer et l'effacement de ceux qui forment les points doubles sur les contours entourant les zones à surfacer.

3. Processeur de surfaçage selon la revendication 2, caractérisé en ce qu'il comprend un organe de "clipping" (21) pour faire apparaître des fenêtres surfacées dans l'image du processeur graphique.

4. Processeur de surfaçage selon l'une quelconque des revendications 2 et 3, caractérisé en ce qu'il comprend également une mémoire (24) pour mémoriser les coordonnées maximales et minimales des contours sur chaque ligne d'image, un contrôleur de mémoire (25) et un séquenceur (26) pour lancer des cycles d'écriture et de lecture des dispositifs de mémorisation des contours (19) et de la mémoire (24) pour mémoriser les coordonnées maximales et minimales des contours et pour commander les opérations logiques exécutées par la logique de décision (20) et un générateur de symboles (27) couplé à la sortie de la logique de décision pour le remplissage des zones surfacées par des symboles.

5. Processeur de surfaçage selon l'une quelconque des revendications 2 à 4, caractérisé en ce que la logique de décision (20) est formée par une mémoire morte programmable adressée par : l'état d'appartenance ou non au contour mémorisé dans le dispositif de mémorisation des contours (19) de chacun des pixels voisins du pixel analysé, l'état d'appartenance à la zone intérieure au contour à surfacer des pixels qui précèdent le pixel analysé sur la même ligne et l'état d'appartenance ou non à la zone délimitée par le contour à surfacer des pixels voisins du pixel analysé sur la ligne précédente.

## Patentansprüche

1. Verfahren zum Abgrenzen von durch Umrisse begrenzten Bildschirmbereichen für Grafikprozessoren, dadurch gekennzeichnet, daß es aus folgenden Schritten besteht: Speichern (4) der vom Grafikprozessor (18) gelieferten Umrisse in einem Hilfsspeicher (19) unter Ausschluß der doppelten Punkte (3), Abtasten des Bilds Zeile für Zeile zur Bestimmung der Schnittpunkte der Zeilen und Umrisse, Speichern (5) der Maximal- und Minimalwerte der Schnittpunkte zur Begrenzung des abzugrenzenden Bereiches bei jedem Umriß, und Beurteilung (6, 7) jedes einzelnen Bildpunkts entlang jeder Zeile in jedem so begrenzten Bereich, um zu entscheiden, ob sie innerhalb des abzugrenzenden Bereichs liegen, und um sie, wenn dies zutrifft (8, 9, 10, 11, 12), in einen Bildspeicher zu laden.

2. Prozessor zur Durchführung des Verfahrens nach Anspruch 1, mit:
– einer Einrichtung (19) zur Speicherung der Bildumrisse und
– einer an die Einrichtung zur Speicherung der Umrisse angeschlossenen Entscheidungslogik (20), um die Zugehörigkeit jedes Bildpunkts des analysierten Bilds zu einem durch einen Umriß abgegrenzten Bereich festzustellen, und dadurch gekennzeichnet, daß der Prozessor eine «Exklusiv-ODER» -Schaltung (22) aufweist, die an die Umrißspeichereinrichtung (19) zum Speichern der zu einem abzugrenzenden Umriß gehörenden Bildpunkte in die Umrißspeichereinrichtung (19) sowie zum Löschen jener Bildpunkte angeschlossen ist, die Doppelpunkte auf den die zu begrenzenden Bereiche umgebenden Umrissen bilden.

3. Prozessor nach Anspruch 2, dadurch gekennzeichnet, daß er ein Mittel (21) zum Klippen (21) aufweist, mit dem im Bild des Grafikprozessors abgegrenzte Fenster sichtbar gemacht werden.

4. Prozessor nach einem beliebigen der Ansprüche 2 oder 3, dadurch gekennzeichnet, daß er weiter einen Speicher (24) zum Speichern der Maximal- und Minimalkoordinatenwerte der Umrisse auf jeder Bildzeile, einen Speicherkontroller (25) und eine Ablaufsteuerung (26) zum Auslösen von Schreib- und Lesezyklen in den Umrißspeichern (19) sowie im Speicher (24) für die Speicherung der Maximal- und Minimalkoordinatenwerte der Umrisse und zum Steuern der von der Entscheidungslogik (20) ausgeführten logischen Operationen und eines Symbolgenerators (27) aufweist, der an den Ausgang der Entscheidungslogik zum Ausfüllen der abgegrenzten Bereiche mit Symbolen angeschlossen ist.

5. Prozessor nach einem der Ansprüche 2 bis 4, dadurch gekennzeichnet, daß die Entscheidungslogik (20) aus einem programmierbaren Festspeicher besteht, der durch den Status oder Zugehörigkeit der Nichtzugehörigkeit jedes dem analysierten Bildpunkt benachbarten Bildpunkts zu dem in der Umriß-Speichereinrichtung (19) gespeicherten Umriß, durch den Status der Zugehörigkeit der Bildpunkte, welche dem analysierten Bildpunkt auf der gleichen Zeile vorangehen, zum Bereich innerhalb des abzugrenzenden Umrisses, und den Status der Zugehörigkeit oder Nichtzugehörigkeit der dem analysierten Bildpunkt auf der vorhergehenden Zeile benachbarten Bildpunkte zu dem vom abzugrenzenden Umriß begrenzten Bereich adressiert wird.

**Claims**

1. A method for windowing picture areas delimited by contours for use in graphics processors, characterized in that it consists in memorizing (4) in an auxiliary memory (19) the contours delivered by the graphics processor (18) with the exclusion of the duplicate points (3), in scanning the image line by line in order to determine the intersection points of the lines and contours, in memorizing (5) the maximum and minimum values of the intersection points in order to delimit the area to be windowed in each contour line, in assessing (6, 7) within each area thus delimited the pixels one by one of each line in order to determine whether or not they are inside of the area to be windowed, and in loading them in the affirmative (8, 9, 10, 11, 12) into an image memory.

2. A windowing processor used to implement the method according to claim 1, comprising:
– a device (19) for storing image contours, and
– a decision logic (20) coupled to the contour memory device for determining if a pixel of the analyzed image belongs to an area delimited by a contour to be windowed, and characterized in that it comprises an "Exclusive OR" circuit (22) coupled to the contour memory device (19) in order to allow for recording in the contour memory device (19) of the pixels, which belong to a contour to be windowed, and for erasing of those pixels which form duplicate points on the contours surrounding the areas to be windowed.

3. A windowing processor according to claim 2, characterized in that it comprises a clipping member (21) for visualizing outlined windows in the image of the graphics processor.

4. A windowing processor according to claim 2 or 3, characterized in that it further comprises a memory (24) for storing the maximum and minimum coordinate values of the contours in each image line, a memory controller (25) and a sequencer (26) for starting write and read cycles in the contour memory devices (19) and in the memory (24) for storing the maximum and minimum contour coordinate values and for controlling the logic operations carried out by the decision logic (20), and a symbol generator (27) coupled to the output of the decision logic for filling the windowed areas with symbols.

5. A windowing processor according to any one of claims 2 to 4, characterized in that the decision logic (20) is constituted of a programmable read only memory addressed by the status of belonging or not belonging of each of the pixels that neighbour the analyzed pixel to the contour stored in the contour memory device (19), the status of belonging of the pixels which precede the analyzed pixel in the same line to the area inside the contour to be windowed, and the status of belonging or not belonging of the pixels neighbouring the analyzed pixel on the preceding line to the area delimited by the contour to be windowed.

# FIG_1

# FIG_2

| S | $P_8$ | $P_7$ | $P_6$ | $P_5$ | $P_4$ | $P_3$ | $P_2$ | $P_1$ | $P_0$ |
|---|---|---|---|---|---|---|---|---|---|
| 0 | 0 | 0 | 0 | 0 | 0 | 0 | 0 | 0 | 0 |
| 0 | 1 | 0 | 0 | 0 | 0 | 0 | 0 | 0 | 0 |
| 0 | 0 | 1 | 0 | 0 | 0 | 0 | 0 | 0 | 0 |
| 0 | 1 | 1 | 0 | 0 | 0 | 0 | 0 | 0 | 0 |
| 0 | 0 | 1 | 1 | 0 | 0 | 0 | 0 | 0 | 0 |
| 0 | 1 | 1 | 1 | 0 | 0 | 0 | 0 | 0 | 0 |
| 1 | 0 | 0 | 0 | 0 | 1 | 0 | 1 | 1 | 0 |
| 1 | 0 | 0 | 0 | 0 | 1 | 1 | 1 | 1 | 0 |

# FIG_4

# FIG_3